# NEUE EUROPÄISCHE PATENTSCHRIFT

(11) **EP 3 600 889 B2**
(45) Veröffentlichungstag und Bekanntmachung des Hinweises auf die Entscheidung über den Einspruch: **29.07.2026**
(45) Hinweis auf die Patenterteilung: 28.10.2020
(21) Anmeldenummer: 19732350.4
(22) Anmeldetag: 19.06.2019
(51) Int. Cl.: B32B 27/08, B32B 27/18, B32B 27/20, B32B 27/32, B32B 27/34, B32B 27/30, B32B 27/16

(54) **RECYCELFREUNDLICHES VERPACKUNGSLAMINAT MIT VERBESSERTER WÄRMEBESTÄNDIGKEIT BEIM SIEGELN**
RECYCLABLE PACKAGING LAMINATE WITH IMPROVED HEAT RESISTANCE DURING SEALING
LAMINÉ D'EMBALLAGE RECYCLABLE AYANT UNE RÉSISTANCE À LA CHALEUR AMÉLIORÉE PENDANT LE SCELLAGE

(30) Priorität: 21.06.2018 AT 505002018
(43) Veröffentlichungstag der Anmeldung: 05.02.2020
(73) Patentinhaber: Constantia Pirk GmbH & Co. KG, 92712 Pirk (DE)
(72) Erfinder: LAMTIGUI, Thami, 80992 München (DE); GREFENSTEIN, Achim, 67122 Altrip (DE)
(74) Vertreter: Weiss Patentanwalts GmbH
(86) Internationale Anmeldenummer: PCT/EP2019/066275
(87) Internationale Veröffentlichungsnummer: WO 2019/243456

(56) Entgegenhaltungen:
- EP-A1- 0 399 113
- EP-A1- 0 764 519
- WO-A1-2017/207221
- WO-A1-2018/182712
- WO-A1-98/49005
- US-A- 4 352 850
- US-A- 4 701 360
- US-A- 4 999 229
- US-A- 5 035 851
- US-A- 5 320 889
- US-A1- 2003 012 901
- US-A1- 2008 281 045
- US-A1- 2013 065 002
- US-A1- 2014 199 505
- US-A1- 2017 341 350
- US-A1- 2018 079 188
- US-B1- 6 232 382
- MORRIS BARRY A.: "Multilayer films from resin and process to end use", THE SCIENCE AND TECHNOLOGY OF FLEXIBLE PACKAGING, 1 January 2017 (2017-01-01), pages 1 - 9, XP055933677
- EVAL Film for Food Packaging
- EXCEED Biaxially Oriented EVOH Film
- Oriented EVOH Film - Properties, Applications and Implications,1984

## Beschreibung

Die gegenständliche Erfindung betrifft ein recyclingfreundliches Verpackungslaminat bestehend aus einer Siegelschicht, einer Substratschicht und einer Wärmestabilitätsschicht und ein Verfahren zum Herstellen eines solchen Verpackungslaminats bei dem eine außen liegende Siegelschicht mit einem Polyethylen-Anteil von zumindest 80 Vol% mit einer Substratschicht mit einem Anteil von Polyethylen hoher Dichte (HDPE) von zumindest 60 Vol% und mit einer Wärmestabilitätsschicht verbunden wird, wobei die Wärmestabilitätsschicht außen liegend, gegenüber der Siegelschicht angeordnet wird und die Substratschicht zwischen der Siegelschicht und der Wärmestabilitätsschicht angeordnet wird.

In der Verpackungsindustrie werden Verpackungslaminate verwendet, die je nach Anwendung verschiedene Eigenschaften aufweisen sollen. Solche Verpackungslaminate sind in der Regel mehrschichtige Kunststofffolien, die im Extrusionsverfahren, Co-Extrusionsverfahren (in beiden Fällen sowohl im Flachfolien-, als auch im Blasfolienverfahren) oder Kaschierverfahren (Verbindung einzelner Schichten mittels eines Kaschierklebers, auch als Extrusionskaschierung), auch Mischungen davon, hergestellt werden. Im Verpackungslaminat können auch nicht aus Kunststoff bestehende Schichten integriert sein, beispielsweise eine Schicht aus Aluminium oder Papier. Das Verpackungslaminat weist in der Regel auch eine äußere Siegelschicht auf, um das Verpackungslaminat durch Thermosiegeln zu einer gewünschten Verpackung, wie z.B. einem Beutel, einem Sack, eine Tüte, usw., zu verarbeiten. In einer anderen Anwendung kann ein Verpackungslaminat auch als Schrumpffolie ausgeführt sein, die je nach Anwendung auch in siegelfähiger, aber unbedruckter Ausführung, z.B. für die Verpackung von größeren Fleischportionen, hergestellt sein kann.

Eine typische Anforderung an ein Verpackungslaminat ist eine Barrierefunktion gegen Wasserdampf, Sauerstoff und/oder Aroma. Zu diesem Zweck enthält das Verpackungslaminat in der Regel eine Barriereschicht aus Aluminium oder einem geeigneten Barrierepolymer, wie beispielweise Ethylen-Vinylalkohol-Copolymer (EVOH) oder Polyamid (PA). Eine Barriereschicht, beispielswiese aus EVOH, ist üblicherweise zwischen zwei weiteren Laminatschichten angeordnet, da sich die Barriereeigenschaften des EVOH durch Feuchtigkeit (auch Luftfeuchtigkeit) verschlechtern können.

Daneben können noch weitere Schichten enthalten sein, um dem Verpackungslaminat die gewünschten Eigenschaften, wie Zähigkeit, Steifigkeit, Schrumpffähigkeit, Reißfestigkeit, etc., zu verleihen.

Um das Verpackungslaminat einfach verarbeiten zu können, soll sich das Verpackungslaminat auch nicht Werfen oder Einrollen (das sogenannte Curling), weshalb üblicherweise symmetrische Schichtaufbauten zum Einsatz kommen.

Ferner ist es bekannt, die Eigenschaften des Verpackungslaminats durch eine mono- oder bidirektionale Orientierung zu verändern. Eine Art Orientierung kann durch den Extrusionsprozess erfolgen, beispielsweise bei einem Mehrfachblasen-Extrusionsverfahren (multiple bubble process) erfolgen. Üblicherweise erfolgt die Orientierung aber erst nach dem Extrusionsprozess durch eine Dehnung des Verpackungslaminats in Maschinenrichtung (in Längsrichtung des Verpackungslaminats) und/oder in Querrichtung (normal auf die Längsrichtung). Durch diese Orientierung des Verpackungslaminats kann vor allem die Steifigkeit, Zugfestigkeit und Zähigkeit verbessert werden. Weiters kann durch die Orientierung die Schrumpfeigenschaft des Verpackungslaminats erreicht werden, dass auch an sich eher trübe Materialien, wie z.B. HDPE, nach dem Verstrecken eine höhere Transparenz erreichen.

Aus Gründen der Recycelfähigkeit ist es auch ein Bestreben möglichst reinsortige Verpackungslaminate herzustellen, also beispielsweise Verpackungslaminate nur auf Polyethylenbasis oder als Mischung von Polyethylen basierten Kunststoffen mit hinsichtlich der Recycelfähigkeit kompatiblen Kunststoffen in akzeptabel niedrigen Mengen.

Eine Siegelschicht ist typischerweise aus einem Polyolefin, in der Regel Polypropylen (PP) oder Polyethylen (PE) in den verschiedenen Dichten LLDPE, LDPE, MDPE oder HDPE und auch als Mischungen, ausgeführt, wobei selbstverständlich auch andere Materialen für die Siegelschicht in Frage kommen. Zum Siegeln, beispielsweise zur Herstellung einer Verpackung wie Beutel, wird das gefaltete Verpackungslaminat zwischen zwei temperierte Siegelbacken zusammengepresst. Auch beim Verschließen von Behältnissen mit Deckelfolien wird ein Verpackungslaminat zwischen temperierten Siegelbacken zusammengepresst. Dadurch schmilzt das Siegelmedium auf, wodurch sich nach dem Abkühlen eine Verbindung zwischen den benachbarten Siegelschichten ausbildet. Hierbei ist es natürlich wünschenswert die Zeit zum Siegeln so weit wie möglich zu reduzieren, da das den Durchsatz auf einer Verpackungsmaschine erhöhen kann. Das kann unter anderem mit höheren Siegeltemperaturen erreicht werden, da damit die Wärme rascher von außen nach innen zur Siegelstelle geleitet wird. Die maximale mögliche Siegeltemperatur hängt aber natürlich insbesondere vom Material der äußersten, dem Siegelbacken zugewandten Schicht des Verpackungslaminats ab, vor allem von der Schmelztemperatur dieses Materials. Beispielsweise hat HDPE eine Schmelztemperatur von ca. 130°C. Wenn man von einer minimal benötigten Siegeltemperatur von 80°C (eher darüber) ausgeht, erkennt man, dass das Siegelfenster (der Temperaturbereich in dem gesiegelt werden muss) eng ist. Das erschwert einerseits die Prozessführung und andererseits reduziert das auch die erzielbaren Siegelzeiten.

Dem könnte man durch Materialien mit erhöhter Wärmestabilität, beispielsweise Polyester (PET), in der äußersten Schicht entgegnen. Dem steht aber entgegen, dass ein Verpackungslaminat aus PE Materialien mit einer PET Schicht nicht recycelt werden kann. Auch eine Zumischung von Polypropylen (PP) zum HDPE der äußeren Schicht würde die Wärmestabilität erhöhen. Aber auch in diesem Fall würde das die Recycelfähigkeit des Laminats negativ beeinträchtigen. Eine Mischung aus HDPE mit einem Cycloolefin-Copolymer (COC) würde ebenfalls die Wärmestabilität erhöhen und wäre bei Zugabe von geringen Mengen von COC aus Sicht der Recycelfähigkeit noch akzeptabel. Allerdings sind COC teuer was diese für den Einsatz in Verpackungslaminaten, bei denen die Kosten eine ganz entscheidende Rolle spielen, eher uninteressant macht.

Aus der EP 764 519 A1 ist ein tiefziehbares Laminat bekannt mit einer äußeren EVOH Schicht, die eine Barriereschicht ausbilden soll und dem Laminat Wärmestabilität zum tiefziehen geben soll. Gleichzeitig soll die EVOH Schicht ein Ankleben des Laminats an der Tiefziehform verhindern. Die Barriereeigenschaften von EVOH werden durch Feuchtigkeit bekanntermaßen verschlechtert, weshalb EVOH üblicherweise nicht in einer äußeren Schicht verwendet wird. Aufgrund der angestrebten Barriereeigenschaften der EVOH Schicht weist die EVOH Schicht im Laminat der EP 764 519 A1 folglich eine relativ große Dicke von 15 - 30% der Gesamtdicke des Laminats auf, um trotzdem eine ausreichende Barrierewirkung zu erzielen. Nachdem EVOH ein teures Material ist, wird das tiefziehbare Laminat dadurch aber erheblich verteuert.

Es ist eine Aufgabe der gegenständlichen Erfindung ein recycelfreundliches Verpackungslaminat anzugeben, das eine verbesserte Wärmestabilität zum Siegeln aufweist, sowie ein Herstellverfahren für ein solches Verpackungslaminat anzugeben.

Diese Aufgabe wird dadurch gelöst, dass die Wärmestabilitätsschicht aus Ethylen-Vinylalkohol-Copolymer hergestellt wird und die Dicke der Wärmestabilitätsschicht bis zu 10%, vorzugsweise bis zu 5%, der Gesamtdicke des Verpackungslaminats, aber maximal 10 µm, ausmacht und dass die Substratschicht und die Wärmestabilitätsschicht coextrudiert werden, und anschließend mit der Siegelschicht verbunden werden, und dass die coextrudierte Substratschicht und Wärmestabilitätsschicht in Maschinenrichtung und/oder in Querrichtung gereckt werden, bevor diese mit der Siegelschicht verbunden werden. Es wurde überraschender Weise festgestellt, dass eine derart dünne Schicht aus EVOH an der Außenseite des Verpackungslaminats die Wärmestabilität des Verpackungslaminats zum Siegeln deutlich erhöhen kann, ohne die Recycelfähigkeit zu beeinträchtigen. Trotz der geringen Dicke kann die Siegeltemperatur dadurch deutlich angehoben werden, was die Siegelzeiten verkürzt und die Siegelung flexibler macht, weil dadurch auch das Siegelfenster deutlich vergrößert wird. Der Siegelprozess kann dadurch schneller, sicherer und flexibler gemacht werden, ohne dass die EVOH-Außenschicht an der Siegelbacke anklebt oder unerwünschte optische Markierungen am Verpackungslaminat entstehen.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine erste Ausgestaltung eines erfindungsgemäßen Verpackungslaminats,
Fig.2 ein aus einem erfindungsgemäßen Verpackungslaminat durch Siegeln hergestellter Beutel und
Fig.3 das Verschließen eines Behältnisses durch Siegeln einer Deckelfolie aus einem erfindungsgemäßen Verpackungslaminat.

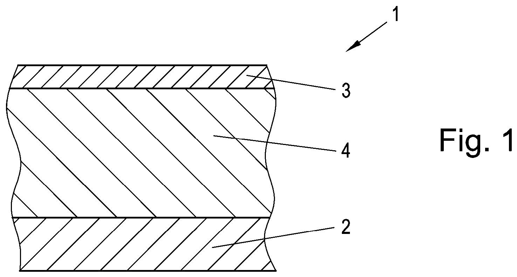

Die Fig.1 zeigt ein erfindungsgemäßes Verpackungslaminat 1 mit zwei äußeren Schichten, einer Siegelschicht 2 und einer Wärmestabilitätsschicht 3 und einer dazwischen angeordneten Substratschicht 4.

Die Substratschicht 4 besteht vorrangig aus Polyethylen hoher Dichte (HDPE) und damit hinsichtlich der Recycelfreundlichkeit kompatiblen Materialen. Erfindungsgemäß hat die Substratschicht 4 ein Anteil von Polyethylen (PE) hoher Dichte (HDPE) von mindestens 60 Vol%, vorzugsweise zumindest 70 Vol% HDPE-Anteil und ganz besonders vorzugsweise zumindest 80 Vol% HDPE-Anteil. Der HDPE-Anteil kann dabei gegen 100 Vol% gehen, wobei aufgrund üblicher Additive in Verpackungslaminaten 1 (wie Slipadditive, Antiblockadditive, Farbstoffe, Füllstoffe, usw.) 100 Vol% HDPE-Anteil in der Regel nie erreicht wird. Der Rest (neben allfälligen Additiven) ist ein kompatibles, die Recycelfähigkeit nicht beeinträchtigendes Polyolefin-Material. Als kompatibles Polyolefin-Material kommen grundsätzlich jegliche Arten von Polyethylenen in Frage, insbesondere auch Ethylen-Copolymere, wie beispielsweise Ethylen-Vinylacetat-Copolymer (EVA), Methacrylsäureethylester (EMA), Ethylen/AcrylsäureCopolymer (EAA) oder Ethylen-Butylacrylat-Copolymer (EBA). Ebenso kann als kompatibles Polyolefin-Material auch Polypropylen (PP) oder ein Cycloolefin-Copolymer (COC) im Ausmaß von maximal 20 Vol% verwendet werden. Im Falle vom PP wird vorzugsweise ein Polypropylen-Random-Copolymer mit Ethylen als Comonomer (üblich 5 bis 15%), ein Polypropylen-Copolymer mit Ethylen oder ein Polypropylen-Homopolymer, das mit linearen PE-Typen, wie mLLDPE, LLDPE oder HDPE ausreichend kompatibel ist, verwendet, um eine zumindest begrenzte Recycelfähigkeit zu erzielen.

In der Substratschicht 4 kann aber auch eine Mischung von HDPE mit verschiedenen PE-Typen oder verschiedenen PE-Typen in Form von Co-Polymeren oder auch mehrschichtig verwendet werden. Unter einem HDPE wird ein PE Typ mit einer Dichte zwischen 0,94-0,97 g/cm³ verstanden. Andere mögliche PE-Typen sind beispielsweise lineares Polyethylen niedriger Dichte (LLDPE) (mit einer Dichte zwischen 0,87-0,94g/cm³), ein Polyethylen niedriger Dichte (LDPE) (mit einer Dichte zwischen 0,915-0,935 g/cm³) oder auch ein lineares Metallocene Polyethylen niedriger Dichte (mLLDPE).

Erfindungsgemäß wird in der Substratschicht 4 hauptsächliche HDPE verwendet, mit zumindest 60 Vol%, vorzugsweise zumindest 70 Vol% und ganz besonders vorzugsweise zumindest 80 Vol% HDPE-Anteil. Der Rest ist ein kompatibles, die Recycelfähigkeit nicht beeinträchtigendes Polyolefin-Material, beispielsweise wie oben beschrieben.

Additive werden in geringen Mengen zugegeben (maximal 5 Vol%) und beeinträchtigen die Recycelfähigkeit des Verpackungslaminats 1 damit nicht.

Das HDPE und das kompatible Polyolefin-Material können dabei in der Substratschicht 4 als Mischung vorliegen. Die Substratschicht 4 kann aber auch mehrschichtig (extrudiert oder co-extrudiert) aufgebaut sein mit einer (oder auch mehrerer) HDPE Schicht und einer (oder auch mehrerer) Schicht aus dem kompatiblen Polyolefin-Material. Die Dicke der Substratschicht 4 beträgt vorzugsweise 5 bis 35µm.

Eine Substratschicht 4 könnte beispielsweise mit einer zentralen PE-Schicht und zwei daran anschließenden HDPE-Schichten, vorzugsweise eine HDPE-Schicht mit einem niedrigen mLLDPE oder LLDPE Anteil (beispielsweise 5 bis 10 Vol%) oder entsprechenden Schichten aus mLLDPE oder LLDPE, ausgeführt sein. In einem solchen symmetrischen Aufbau können die beiden äußeren Schichten der Substratschicht 4 auch dicker ausgeführt werden, als die inneren Schichten, also beispielsweise in Form eines x/1/x, Aufbaus mit x >1, insbesondere x = 1.5, 2, 3 oder 4.

Die Wärmestabilitätsschicht 3 besteht aus Ethylen-Vinylalkohol-Copolymer (EVOH) und hat eine Dicke von maximal 10%, vorzugsweise maximal 5%, der Gesamtdicke des Verpackungslaminats 1, also z.B. maximal 3 bis 10µm bei einer typischen Laminatdicke zwischen 30 und 100 µm. Die Laminatdicke des Verpackungslaminats 1 kann aber natürlich auch größer als 100 µm sein, wobei in diesem Fall die Dicke der Wärmestabilitätsschicht 3 dann nicht größer als 10 µm ist. Aufgrund der geringen Dicke der Wärmestabilitätsschicht 3 wird die Recycelfreundlichkeit des Verpackungslaminats 1 nicht beeinträchtigt. Für die Wärmestabilitätsschicht 3 wird EVOH mit einem PE-Anteil von maximal 50 mol%, vorzugsweise zwischen 30 mol% und 50 mol%, verwendet, um eine ausreichend hohe Schmelztemperatur der Wärmestabilitätsschicht 3 zu erzielen. Je nach PE-Anteil im EVOH erreicht man eine Schmelztemperatur des EVOH von zumindest 155°C, vorzugsweise von zumindest 165°C. Die Wärmestabilitätsschicht 3 bringt im Verpackungslaminat 1 trotz der Verwendung eines Barrierepolymers nur teilweise eine Barrierewirkung hervor. Aufgrund der geringen Dicke und der Anordnung im Verpackungslaminat 1 außen werden die Barriereeigenschaften des EVOH (insbesondere als Gasbarriere, z.B. gegen Sauerstoff) zum einen durch Feuchtigkeit, auch Luftfeuchtigkeit, in der Produktion und Lagerung, deutlich herabgesetzt. Die EVOH Wärmestabilitätsschicht 3 kann daher die typischerweise geforderten Barriereeigenschaften nicht alleine erbringen und kann daher nicht vorrangig als Barriereschicht eingesetzt werden.

Vorzugsweise wird in der Wärmestabilitätsschicht 3 nur EVOH verwendet. Es könnte aber auch eine Mischung von EVOH mit einem geringen Anteil von einem Ethylen (Co)Polymer, maximal 20 Vol%, verwendet werden.

Die Siegelschicht 2 besteht vorwiegend aus einem PE Material, wobei der PE-Anteil an der gesamten Polymermenge der Siegelschicht 2 ohne etwaige zugesetzte mineralische oder anderen Füllstoffe oder Additive zumindest 80 Vol% betragen soll. Hier können verschiedene PE-Typen, also LDPE, LLDPE, MDPE, HDPE reinsortig oder auch als Mischung oder in Form von Co-Polymeren oder auch mehrschichtig, verwendet werden. Die Dicke der Siegelschicht 2 beträgt je nach Anwendung des Verpackungslaminats 1 typischerweise zwischen 20 bis 100 µm. Auch in der Siegelschicht 2 wird für die angestrebte Recycelfreundlichkeit der verbleibende Rest (neben allfälligen Additiven in geringen Mengen) natürlich aus einem kompatiblen Polyolefin-Material, so wie oben beschrieben, bestehen. Die Siegelschicht 2 kann auch mehrschichtig ausgeführt sein, beispielsweise extrudiert, co-extrudiert oder kaschiert.

Durch die Verwendung von vorwiegend PE und dazu kompatiblen Materialien im Verpackungslaminat 1 kann ein besonders recycelfreundliches Laminat hergestellt werden, das mit gängigen Methoden im mechanischen Recycling einfach und kostengünstig wiederverwertet werden kann.

Darüber hinaus konnte überraschender Weise festgestellt werden, dass die Wärmestabilitätsschicht 3 aus EVOH die Wärmestabilität beim Siegeln des Verpackungslaminats 1 trotz der sehr geringen Dicke von maximal 10%, vorzugsweise maximal 5%, der Gesamtdicke des Verpackungslaminats 1 (absolut maximal 10 µm) deutlich verbessern kann. Versuche haben gezeigt, dass die Siegelbackentemperatur beim Siegeln des Verpackungslaminats 1 aufgrund der verbesserten Wärmestabilität deutlich erhöht werden kann. Bei Verwendung eines EVOH mit 44 mol% PE konnte die Siegelbackentemperatur beispielsweise von maximal 130°C bei einem HDPE in der Außenschicht auf 150°C erhöht werden und bei einem EVOH mit 32 mol% PE auf mindestens 160°C, ohne dass die Außenschicht aus EVOH an einer Siegelbacke anklebt oder optisch unerwünschte Markierungen am Verpackungslaminat 1 entstehen. Je höher die Schmelztemperatur des EVOH ist, umso höher kann die Siegelbackentemperatur werden. Nachdem hierbei auf die Barriereeigenschaft nicht Rücksicht genommen werden muss, kann der Anteil von PE im EVOH hinsichtlich der Wärmestabilität optimiert werden. Ausreichende Wärmestabilität bedeutet hierbei natürlich, dass mit einer gewissen Siegeltemperatur gesiegelt werden kann, ohne dass das EVOH der Wärmestabilitätsschicht 3 beeinträchtigt wird. Dazu muss natürlich insbesondere die Schmelztemperatur des EVOH entsprechen hoch sein.

Das Verpackungslaminat 1 kann beispielsweise durch Co-Extrusion hergestellt werden. Vorzugsweise kommt das bekannte Blasfolien- oder Flachfolienextrusionsverfahren zum Einsatz.

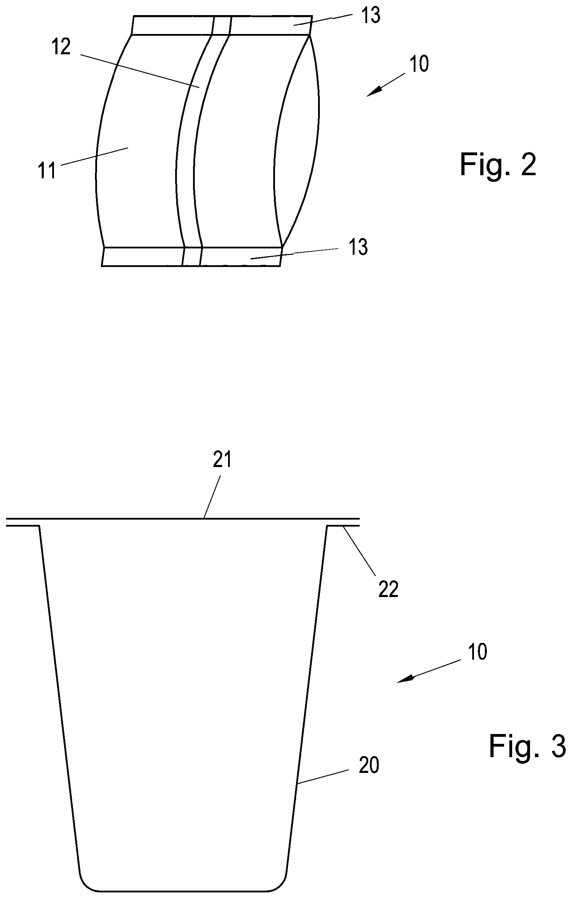

Es ist aber auch möglich, dass zuerst die Wärmestabilitätsschicht 3 und die Substratschicht 4 zu einer ersten Laminatschicht 7 co-extrudiert werden (z.B. Fig.2).

Danach könnte diese erste Laminatschicht 7 mit der Siegelschicht 2 verbunden werden, beispielsweise durch Extrusionskaschierung oder Extrusionsbeschichten der Siegelschicht 2 auf die erste Laminatschicht 7 oder durch Klebekaschierung mit einem geeigneten Kaschiermittel. Beim Kaschieren wird die Siegelschicht 2 mittels eines geeigneten Kaschierklebers, beispielsweise auf Basis von Polyurethanklebern oder auch Polyolefincopolymeren bei der Extrusionskaschierung, mit der ersten Laminatschicht 7 verbunden. Die Dicke des Kaschierklebers beträgt vorzugsweise 2 bis 5 g/m² bei üblichen Klebern auf Polyurethanbasis bzw. 5 bis 20 g/m² bei der Extrusionskaschierung.

Zusätzlich könnte die erste Laminatschicht 7 vor dem Verbinden mit der Siegelschicht 2 in Maschinenrichtung (in der Regel die Längs- oder Extrusionsrichtung) gereckt werden. Der Reckgrad beträgt dabei vorzugsweise zumindest 4:1 in Maschinenrichtung. Das Recken kann dabei in-line (also unmittelbar nach der Herstellung der ersten Laminatschicht 7) oder off-line (also zu einem späteren Zeitpunkt nach der Herstellung) erfolgen. Ein unidirektionales Recken kann wesentlich einfacher und kostengünstiger durchgeführt werden, als ein bidirektionales Recken, wodurch die Kosten für die Herstellung gesenkt werden können. Selbstverständlich könnte die erste Laminatschicht 7 aber auch bidirektional gereckt werden.

Hier ist anzumerken, dass bei der Blasfolienextrusion und Flachfolienextrusion der Extrusionsspalt (bei der Blasfolie 1,5 bis 2,5 mm) bzw. der Spalt der Extrusionsdüse deutlich größer ist, als die Enddicke der extrudierten Folie (typisch zwischen 10 bis 200 µm). Hierzu wird die extrudierte Schmelze bei Temperaturen deutlich über dem Schmelzpunkt des extrudierten Polymers gedehnt, wodurch es die endgültige Dicke erhält. Bei der Blasfolienextrusion wird die Schmelze z.B. typischerweise in Querrichtung um ca. den Faktor 2 bis 3 (das sogenannte Aufblasverhältnis) und in Längsrichtung um den Faktor 1:10 bis 1:100 (das sogenannte Abzugsverhältnis) gedehnt. Dieses Dehnen beim Extrudieren kann aber in der Wirkung nicht mit dem Recken einer Kunststofffolie verglichen werden, da das Recken üblicherweise bei Temperaturen knapp unterhalb des Schmelzpunktes des Polymers erfolgt, um die ungeordneten Polymere und die teilkristallinen Bereiche durch das Recken in Reckrichtung bleibend auszurichten.

Durch das Recken ergibt sich auch eine hohe Transparenz, vor allem der Substratschicht 4.

Bevorzugt wird die erste Laminatschicht 7 mit dem Blasfolienextrusionverfahren hergestellt, weil sich damit produktionsbedingt weniger Randabschnitt ergibt, was vor allem bei den teureren Barrierepolymeren zu niedrigeren Kosten des Verpackungslaminats 1 führt. Bei der Blasfolienextrusion können auch zähfließendere HDPE-Materialien mit einem MFI (Mass Flow Index) von kleiner 3 verwendet werden. Solche HDPE Materialen haben ein höheres Molekulargewicht und bessere mechanische Eigenschaften, was für die Verwendung in einem Verpackungslaminat 1 günstig ist.

Die Substratschicht 4 könnte auch bedruckt werden, die zu diesem Zweck auch einer Vorbehandlung der zu bedruckenden Oberfläche unterzogen werden kann, beispielsweise einer Corona- oder Flammbehandlung, um die Haftung der Druckschicht auf der Substratschicht 4 zu verbessern. Hierbei können gängige Druckverfahren eingesetzt werden, beispielsweise ein Tiefdruckverfahren oder ein Flexodruckverfahren. Solche weiteren Behandlungen finden natürlich nach einem allfälligen Recken statt.

Durch das Bedrucken zumindest einer Schicht der ersten Laminatschicht 7 oder auch der der ersten Laminatschicht 7 zugewandten Seite der Siegelschicht 2 mit einem Barrierelack, beispielsweise Polyvinylalkohol (PVOH), kann die Barrierewirkung des Verpackungslaminats 1 weiter erhöht werden. Solche Lackschichten können sehr dünn aufgetragen werden, typischerweise im Bereich von 0,5 bis 2,0 g/m², und beeinträchtigen damit die Recycelfreundlichkeit des Verpackungslaminats 1 nicht.

Das erfindungsgemäße Verpackungslaminat 1 wird üblicherweise zur Herstellung einer Verpackung, beispielsweise für Lebensmittel, verwendet. Dazu kann das Verpackungslaminat 1 zugeschnitten und zur Verpackung 10 geformt werden, beispielsweise durch Falten und Siegeln, wie in Fig.2 am Beispiel eine Beutels 11 mit einer Längssiegelung 12 und zwei Quersiegelungen 13 dargestellt. Das Verpackungslaminat 1 kann aber auch direkt in bekannten kontinuierlichen Verpackungsmaschinen, z.B. sogenannte Form-Füllmaschinen oder Schlauchbeutelmaschinen, verarbeitet werden. Zum Siegeln wird das gefaltete Verpackungslaminat 1 bekanntermaßen an der Siegelstelle zwischen zwei temperierten Siegelbacken zusammengepresst. Dabei ist die Wärmestabilitätsschicht 3 des Verpackungslaminats 1 den Siegelbacken zugewandt. Aus dem Verpackungslaminat 1 können aber auch Deckelplatinen 21 zum Verschließen von Behältnissen 20 als Verpackung 10 ausgestanzt werden, wie in Fig.3 dargestellt. In allen Fällen wird an der Siegelschicht 2 des Verpackungslaminats 1 gesiegelt, entweder gegen die eigene Siegelschicht (z.B. bei gefalteten Packungen, wie Beutel, Tüten, Säcke) oder gegen eine andere Siegelschicht (z.B. an einem Siegelrand 22 eines Behältnisses 20). Die Siegelschicht 2 ist dabei in der fertigen Verpackung dem verpackten Produkt zugewandt und die Wärmestabilitätsschicht 3 außenliegend.

## Patentansprüche

1. Verfahren zum Herstellen eines Verpackungslaminats (1) bestehend aus einer Siegelschicht (2), einer Substratschicht (4) und einer Wärmestabilitätsschicht (3), wobei die außen liegende Siegelschicht (2) mit einem Polyethylen-Anteil von zumindest 80 Vol% mit der Substratschicht (4) mit einem Anteil von Polyethylen hoher Dichte (HDPE) von zumindest 60 Vol%, vorzugsweise zumindest 70 Vol% und ganz besonders vorzugsweise zumindest 80 Vol%, und mit der Wärmestabilitätsschicht (3) verbunden wird, wobei die Wärmestabilitätsschicht (3) außen liegend, gegenüber der Siegelschicht (2) angeordnet wird und die Substratschicht (4) zwischen der Siegelschicht (2) und der Wärmestabilitätsschicht (3) angeordnet wird, **dadurch gekennzeichnet, dass** die Wärmestabilitätsschicht (3) aus Ethylen-Vinylalkohol-Copolymer hergestellt wird und die Dicke der Wärmestabilitätsschicht (3) bis zu 10%, vorzugsweise bis zu 5%, der Gesamtdicke des Verpackungslaminats (1), aber maximal 10 µm, ausmacht **und dass** die Substratschicht (4) und die Wärmestabilitätsschicht (3) coextrudiert werden und anschließend mit der Siegelschicht (2) verbunden werden, **und dass** die coextrudierte Substratschicht (4) und Wärmestabilitätsschicht (3) in Maschinenrichtung und/oder in Querrichtung gereckt werden bevor diese mit der Siegelschicht (2) verbunden werden.

2. Verfahren nach Anspruch 1, **dadurch gekennzeichnet, dass** als Wärmestabilitätsschicht (3) ein Ethylen-Vinylalkohol-Copolymer mit einem Polyethylen-Anteil von maximal 50 mol%, vorzugsweise zwischen 30 mol% und 50 mol%, verwendet wird.

3. Verpackungslaminat bestehend aus einer Siegelschicht (2), einer Substratschicht (4) und einer Wärmestabilitätsschicht (3), wobei die außen liegende Siegelschicht (2) mit einem Polyethylen-Anteil von zumindest 80 Vol%, die mit der Substratschicht (4) mit einem Anteil von Polyethylen hoher Dichte (HDPE) von zumindest 60 Vol%, vorzugsweise zumindest 70 Vol% und ganz besonders vorzugsweise zumindest 80 Vol%, und mit der Wärmestabilitätsschicht (3) verbunden ist, wobei die Wärmestabilitätsschicht (3) außen liegend, gegenüber der Siegelschicht (2) angeordnet ist und die Substratschicht (4) zwischen der Siegelschicht (2) und der Wärmestabilitätsschicht (3) angeordnet ist, **dadurch gekennzeichnet, dass** die Wärmestabilitätsschicht (3) aus Ethylen-Vinylalkohol-Copolymer hergestellt ist und die Dicke der Wärmestabilitätsschicht (3) bis zu 10%, vorzugsweise bis zu 5%, der Gesamtdicke des Verpackungslaminats (1), aber maximal 10 µm, ausmacht **und dass**- die Substratschicht (4) und die Wärmestabilitätsschicht (3) coextrudiert sind und im Anschluss an das Coextrudieren mit der Siegelschicht (24) verbunden sind **und dass** die coextrudierte Substratschicht (4) und Wärmestabilitätsschicht (3) vor dem Verbinden mit der Siegelschicht (2) in Maschinenrichtung und/oder in Querrichtung gereckt sind.

4. Verpackungslaminat nach Anspruch 3, **dadurch gekennzeichnet, dass** die Wärmestabilitätsschicht (3) ein Ethylen-Vinylalkohol-Copolymer mit einem Polyethylen-Anteil von maximal 50 mol%, vorzugsweise zwischen 30 mol% und 50 mol%, ist.

## Claims

1. A method for producing a packaging laminate (1) consisting of a sealing layer (2), a substrate layer (4) and a thermal stabilization layer (6), wherein the externally arranged sealing layer (2) comprising a polyethylene content of at least 80 vol% is bonded with the substrate layer (4) comprising a content of high density polyethylene of at least 60 vol%, preferably at least 70 vol%, and particularly preferably at least 80 vol%, and with the thermal stabilization layer (6), wherein the thermal stabilization layer (3) is arranged externally opposite the sealing layer (2), and the substrate layer (4) is arranged between the sealing layer (2) and the thermal stabilization layer (3), **characterized in that** the thermal stabilization layer (3) is produced from ethylene-vinyl alcohol copolymer, and the thickness of the thermal stabilization layer (3) constitutes up to 10%, preferably up to 5%, of the total thickness of the packaging laminate (1), but no more than 10 µm, **and in that** the substrate layer (4) and the thermal stabilization layer (3) are co-extruded and subsequently bonded with the sealing layer (2), **and in that** the co-extruded substrate layer (4) and thermal stabilization layer (3) are oriented in the machine direction and/or in the transverse direction before they are bonded with the sealing layer (2).

2. The method according to claim 1, **characterized in that** an ethylene-vinyl alcohol copolymer with a polyethylene content of maximum 50 mol%, preferably between 30 mol% and 50 mol%, is used.

3. A packaging laminate consisting of a sealing layer (2), a substrate layer (4) and a thermal stabilization layer (6), wherein the externally oriented sealing layer (2) comprising a polyethylene content of at least 80 vol% is bonded with the substrate layer (4) comprising a content of high density polyethylene of at least 60 vol%, preferably at least 70 vol%, and particularly preferably at least 80 vol%, and with the thermal stabilization layer (3), wherein the thermal stabilization layer (3) is arranged externally opposite to the sealing layer (2), and the substrate layer (4) is arranged between the sealing layer (2) and the thermal stabilization layer (3), **characterized in that** the thermal stabilization layer (3) is produced from ethylene-vinyl alcohol copolymer, and the thickness of the thermal stabilization layer (3) constitutes up to 10%, preferably up to 5%, of the total thickness of the packaging laminate (1), but no more than 10 µm, **and in that** the substrate layer (4) and the thermal stabilization layer (3) are co-extruded and subsequently bonded with the sealing layer (2), **and in that** the co-extruded substrate layer (4) and thermal stabilization layer (3) are oriented in the machine direction and/or in the transverse direction before they are bonded with the sealing layer (2).

4. The packaging laminate according to claim 3, **characterized in that** the thermal stabilization layer (3) is produced from ethylene-vinyl alcohol copolymer with a polyethylene content of maximum 50 mol%, preferably between 30 mol% and 50 mol%.

## Revendications

1. Procédé pour la fabrication d'un stratifié d'emballage (1) constitué d'une couche de scellement (2), d'une couche de substrat (4) et d'une couche de stabilité thermique (3), dans lequel la couche de scellage (2) située à l'extérieur et comportant une teneur en polyéthylène d'au moins 80 % en volume est reliée à la couche de substrat (4) comportant une teneur en polyéthylène haute densité (HDPE) d'au moins 60 % en volume, de préférence d'au moins 70 % en volume et de manière tout particulièrement préférée d'au moins 80 % en volume, et à la couche de stabilité thermique (3), dans lequel la couche de stabilité thermique (3) est disposée à l'extérieur en faisant face à la couche de scellement (2), et la couche de substrat (4) est disposée entre la couche de scellement (2) et la couche de stabilité thermique (3), **caractérisé en ce que** la couche de stabilité thermique (3) est fabriquée à partir d'un copolymère éthylène-alcool vinylique et l'épaisseur de la couche de stabilité thermique (3) représente jusqu'à 10 %, de préférence jusqu'à 5 %, de l'épaisseur totale du stratifié d'emballage (1), mais au maximum 10 µm, **et en ce que** la couche de substrat (4) et la couche de stabilité thermique (3) sont coextrudées et ensuite reliées à la couche de scellement (2), **et en ce que** la couche de substrat (4) et la couche de stabilité thermique (3) coextrudées sont étirées dans le sens machine et/ou dans la direction transversale avant d'être reliées à la couche de scellement (2).

2. Procédé selon la revendication 1, **caractérisé en ce qu'**un copolymère éthylène-alcool vinylique comportant une teneur en polyéthylène d'au plus 50 % en mole, de préférence comprise entre 30 % en mole et 50 % en mole, est utilisé en tant que couche de stabilité thermique (3).

3. Stratifié d'emballage constitué d'une couche de scellement (2), d'une couche de substrat (4) et d'une couche de stabilité thermique (3), dans lequel la couche de scellement (2) située à l'extérieur et comportant une teneur en polyéthylène d'au moins 80 % en volume, laquelle est reliée à la couche de substrat (4) comportant une teneur en polyéthylène haute densité (HDPE) d'au moins 60 % en volume, de préférence d'au moins 70 % en volume et de manière tout particulièrement préférée d'au moins 80 % en volume, et à la couche de stabilité thermique (3), dans lequel la couche de stabilité thermique (3) est disposée à l'extérieur en faisant face à la couche de scellement (2) et la couche de substrat (4) est disposée entre la couche de scellement (2) et la couche de stabilité thermique (3), **caractérisé en ce que** la couche de stabilité thermique (3) est fabriquée à partir d'un copolymère éthylène-alcool vinylique et l'épaisseur de la couche de stabilité thermique (3) représente jusqu'à 10 %, de préférence jusqu'à 5 %, de l'épaisseur totale du stratifié d'emballage (1), mais au maximum 10 µm, et **en ce que** la couche de substrat (4) et la couche de stabilité thermique (3) sont coextrudées et reliées à la couche de scellement (24) à la suite de la coextrusion, et **en ce que** la couche de substrat (4) et la couche de stabilité thermique (3) coextrudées sont étirées dans le sens machine et/ou dans la direction transversale avant d'être reliées à la couche de scellement (2).

4. Stratifié d'emballage selon la revendication 3, **caractérisé en ce que** la couche de stabilité thermique (3) est un copolymère éthylène-alcool vinylique comportant une teneur en polyéthylène d'au plus 50 % en mole, de préférence comprise entre 30 % en mole et 50 % en mole.
